# EUROPEAN PATENT APPLICATION

(11) **EP 4 152 488 A1**
(43) Date of publication of application: **22.03.2023**
(21) Application number: 21803021.1
(22) Date of filing: 11.05.2021
(51) Int. Cl.: H01M 50/105, H01G 11/78, H01G 11/84, H01M 50/119, H01M 50/121, H01M 50/129

(54) **EXTERIOR MATERIAL FOR POWER STORAGE DEVICE, METHOD FOR MANUFACTURING SAME, AND POWER STORAGE DEVICE**

(30) Priority: 11.05.2020 JP 2020083227
(71) Applicant: DAI NIPPON PRINTING CO., LTD., Tokyo 162-8001 (JP)
(72) Inventor: MITSUZUKA, Satoshi, Tokyo 162-8001 (JP); FUJIWARA, Ryo, Tokyo 162-8001 (JP)
(74) Representative: Müller-Boré & Partner Patentanwälte PartG mbB
(86) International application number: PCT/JP2021/017939
(87) International publication number: WO 2021/230251

(57) **Abstract**

Provided is an exterior material for a power storage device, the exterior material being constituted by a laminate comprising at least a substrate layer, a barrier layer, an adhesive layer, and a thermally adhesive resin layer, in this order, wherein a corrosion-resistant film is provided at least on the surface on the adhesive layer-side of the barrier layer, and when a cross-sectional observation image is acquired using a scanning electron microscope, for the cross section in the thickness direction of the corrosion-resistant film, the corrosion-resistant film is observed in a belt shape in the cross-sectional observation image.

## Description

### TECHNICAL FIELD

The present disclosure relates to an exterior material for electrical storage devices, a method for manufacturing the exterior material for electrical storage devices, and an electrical storage device.

### BACKGROUND ART

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, in recent years, a film-shaped laminate with a base material layer, a barrier layer and a heat-sealable resin layer laminated in this order has been proposed as an exterior material for electrical storage devices which is easily processed into diversified shapes and is capable of achieving thickness reduction and weight reduction (see, for example, Patent Document 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed (thermally sealed) to obtain an electrical storage device with electrical storage device elements stored in the exterior material for electrical storage devices.

### PRIOR ART DOCUMENT

### PATENT DOCUMENT

Patent Document 1: Japanese Patent Laid-open Publication No. 2008-287971

### SUMMARY OF THE INVENTION

### PROBLEMS TO BE SOLVED BY THE INVENTION

Moisture may invade during manufacturing of an electrical storage device and from a heat-sealed portion moisture may enter from the heat-sealed portion between heat-sealable resin layers of an exterior material for the electrical storage device. If moisture invades the inside of the electrical storage device, the moisture may react with an electrolyte or the like, resulting in generation of an acidic substance. For example, an electrolytic solution used in a lithium ion electrical storage device or the like contains a fluorine compound (LiPF₆, LiBF₄ or the like) as an electrolyte, and it is known that hydrogen fluoride is generated if the fluorine compound reacts with water.

A barrier layer of an exterior material for electrical storage devices which is formed of a film-shaped laminate typically includes a metal foil or the like, and there is a problem that corrosion is likely to occur if an acid comes into contact with the barrier layer. As a technique for enhancing the corrosion resistance of such an exterior material for electrical storage devices, a technique is known in which a barrier layer having a corrosion-resistant film formed on a surface thereof by chemical conversion treatment.

As chemical conversion treatment for forming a corrosion-resistant film, various methods have been heretofore known such as chromate treatment using a chromium compound such as chromium oxide and phosphoric acid treatment using a phosphoric acid compound.

However, studies extensively conducted by the present inventors of the present disclosure have revealed that a conventional exterior material for electrical storage devices which includes a corrosion-resistant film on a barrier layer does not exhibit sufficient electrolytic solution resistance in the case of being exposed to a moist environment even through initial adhesion between the barrier layer and an adhesive layer is high. For example, when an exterior material for electrical storage devices is immersed in a hydrous electrolytic solution, and the exterior material for electrical storage devices is then immersed in water to sufficiently remove the electrolytic solution, initial high adhesion (i.e. adhesion before immersion of the exterior material for electrical storage devices in the electrolytic solution containing moisture) between a barrier layer including a corrosion-resistant film and an adhesive layer cannot be maintained (more specifically, deterioration of adhesion by hydrofluoric acid contained in the hydrous electrolytic solution is significant even after the electrolytic solution is sufficiently removed).

Under such circumstances, a main object of the present disclosure is to provide an exterior material for electrical storage devices which is excellent in electrolytic solution resistance. Another object of the present disclosure is to provide a method for manufacturing the exterior material for electrical storage devices, and an electrical storage device obtained using the exterior material for electrical storage devices.

### MEANS FOR SOLVING THE PROBLEM

The inventors of the present disclosure have extensively conducted studies for solving the above-described problems. Resultantly, it has been found that an exterior material for electrical storage devices which includes a laminate including at least a base material layer, a barrier layer, an adhesive layer and a heat-sealable resin layer in this order and includes a corrosion-resistant film on at least a surface of the barrier layer on the adhesion layer side and in which when a cross-sectional observation image of a thickness-direction cross-section of the corrosion-resistant film is acquired using a scanning electron microscope, the corrosion-resistant film is observed in a strip shape on the cross-sectional observation image is excellent in electrolytic solution resistance. More specifically, it has been found that when an exterior material for electrical storage devices is immersed in a hydrous electrolytic solution, and the exterior material for electrical storage devices is then immersed in water to sufficiently remove the electrolytic solution, initial high adhesion (i.e. adhesion before immersion of the exterior material for electrical storage devices in the electrolytic solution containing moisture) between a barrier layer including a corrosion-resistant film and an adhesive layer is maintained. Low adhesion after the electrolytic solution is sufficiently removed indicates that the adhesion is deteriorated by hydrofluoric acid contained in the hydrous electrolytic solution. Since in the exterior material for electrical storage devices according to the present disclosure, initial high adhesion between a barrier layer including a corrosion-resistant film and an adhesive layer is maintained when an electrolytic solution is sufficiently removed, it is evaluated that in the exterior material for electrical storage devices according to the present disclosure, deterioration of adhesion by hydrofluoric acid contained in the hydrous electrolytic solution is suitably suppressed.

The present disclosure has been completed by further conducting studies on the basis above-mentioned findings. That is, the present disclosure provides an invention of an aspect as described below.

Provided is an exterior material for electrical storage devices, including a laminate including a base material layer, a barrier layer, an adhesive layer and a heat-sealable resin layer in this order,
in which the exterior material for electrical storage devices includes a corrosion-resistant film on at least a surface of the barrier layer on the adhesion layer side, and
when a cross-sectional observation image of a thickness-direction cross-section of the corrosion-resistant film is acquired using a scanning electron microscope, the corrosion-resistant film is observed in a strip shape on the cross-sectional observation image.

### ADVANTAGES OF THE INVENTION

According to the present disclosure, it is possible to provide an exterior material for electrical storage devices which is excellent in electrolytic solution resistance. For example, when the exterior material for electrical storage devices according to the present disclosure is immersed in a hydrous electrolytic solution, and the exterior material for electrical storage devices is then immersed in water to sufficiently remove the electrolytic solution, initial high adhesion (i.e. adhesion before immersion of the exterior material for electrical storage devices in the electrolytic solution containing moisture) between a barrier layer including a corrosion-resistant film and an adhesive layer is maintained. According to the present disclosure, it is also possible to provide a method for manufacturing the exterior material for electrical storage devices, and an electrical storage device obtained using the exterior material for electrical storage devices.

### BRIEF DESCRIPTION OF THE DRAWINGS

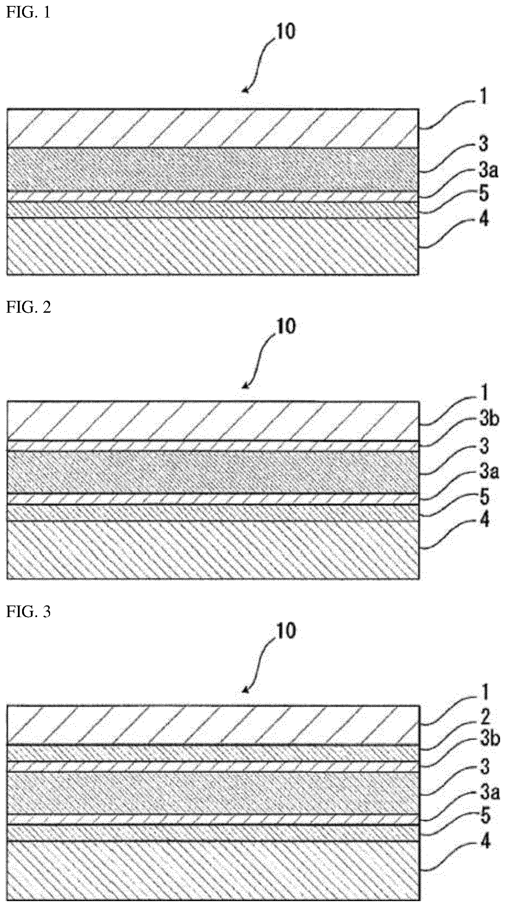

Fig. 1 is a schematic diagram showing an example of a cross-sectional structure of an exterior material for electrical storage devices according to the present disclosure.
Fig. 2 is a schematic diagram showing an example of a cross-sectional structure of an exterior material for electrical storage devices according to the present disclosure.
Fig. 3 is a schematic diagram showing an example of a cross-sectional structure of an exterior material for electrical storage devices according to the present disclosure.

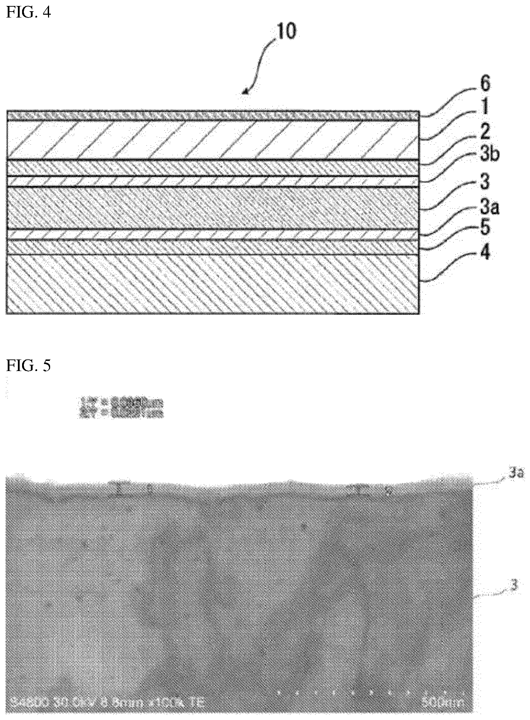

Fig. 4 is a schematic diagram showing an example of a cross-sectional structure of an exterior material for electrical storage devices according to the present disclosure.
Fig. 5 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 1.

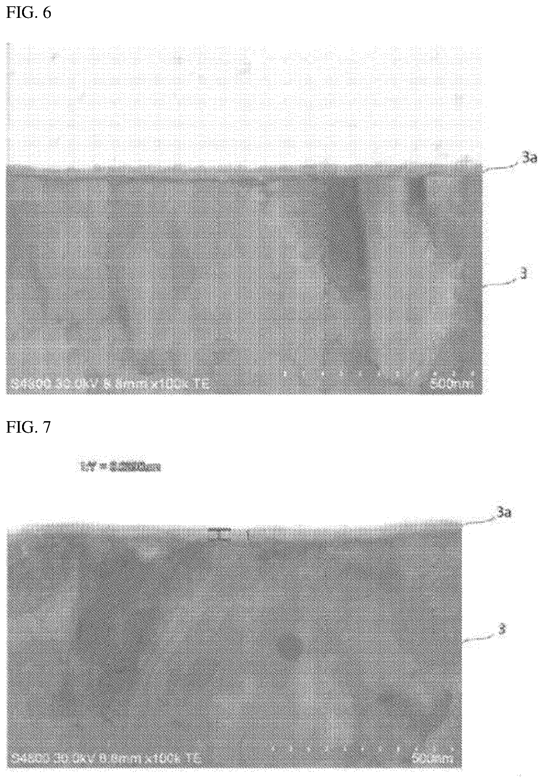

Fig. 6 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 2.
Fig. 7 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 3.

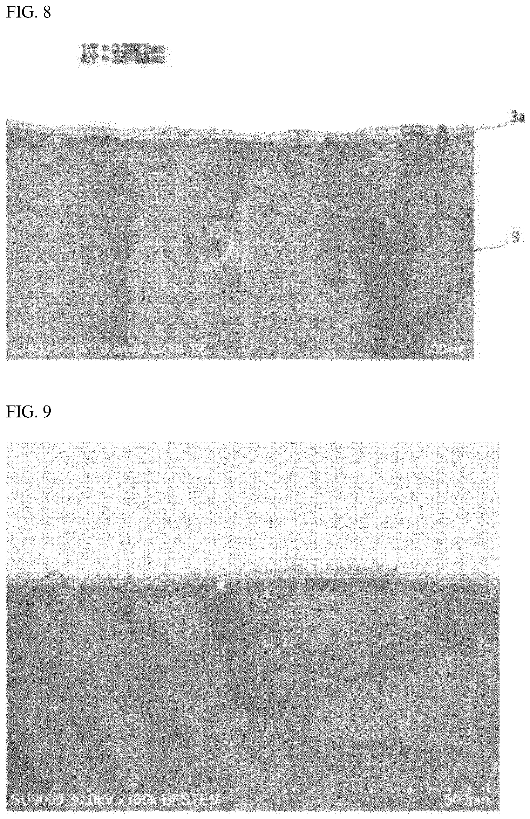

Fig. 8 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 4.
Fig. 9 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 5.

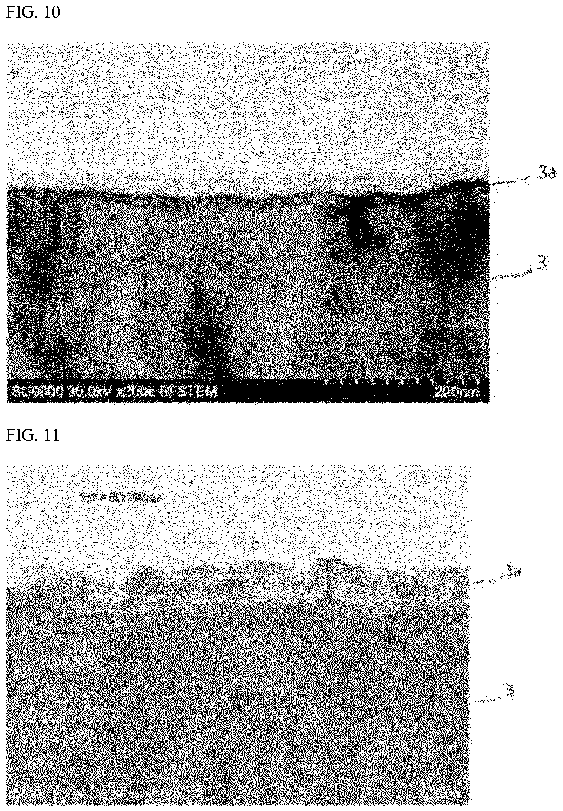

Fig. 10 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Example 2, where the cross-sectional observation image is acquired in the same manner except that the scanning electron microscope is changed from S-4800 manufactured by Hitachi High-Technologies Corporation to newly marketed SU-9000 manufactured by Hitachi High-Technologies Corporation (provided as Example 6).
Fig. 11 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Comparative Example 1.

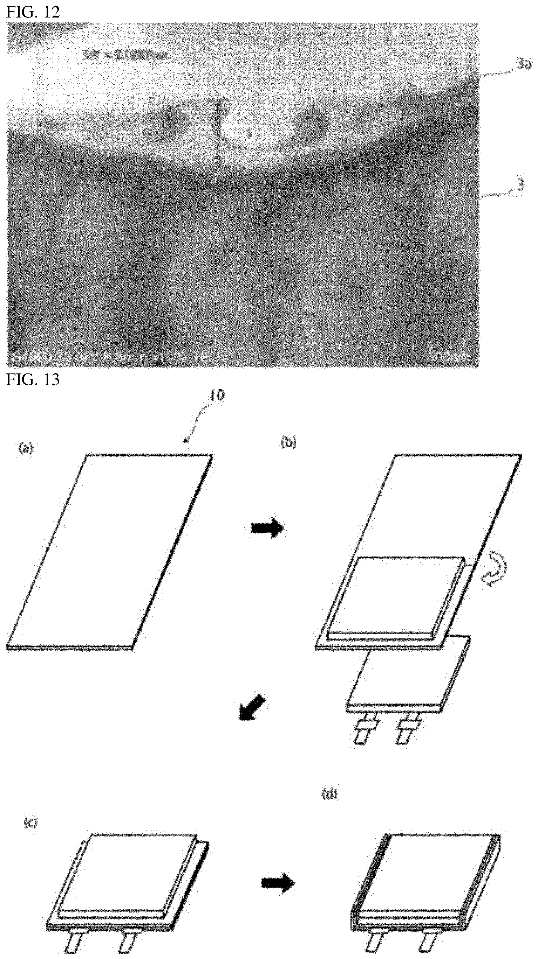

Fig. 12 is a cross-sectional observation image acquired using a scanning electron microscope for a thickness-direction cross-section of a corrosion-resistant film formed on a surface of a barrier layer on the heat-sealable resin layer side (a cross-section image of the barrier layer provided with the corrosion-resistant film (a cross-section image including a part of the corrosion-resistant film and the barrier layer) for an exterior material for electrical storage devices which is obtained in Comparative Example 2.
Fig. 13 is a schematic diagram for illustrating a method for housing an electrical storage device element in a packaging formed from an exterior material for electrical storage devices according to the present disclosure.

### EMBODIMENTS OF THE INVENTION

An exterior material for electrical storage devices according to the present disclosure includes a laminate including a base material layer, a barrier layer, an adhesive layer and a heat-sealable resin layer in this order and includes a corrosion-resistant film on at least a surface of the barrier layer on the adhesion layer side, and when a cross-sectional observation image of a thickness-direction cross-section of the corrosion-resistant film is acquired using a scanning electron microscope, the corrosion-resistant film is observed in a strip shape on the cross-sectional observation image. The exterior material for electrical storage devices according to the present disclosure is excellent in electrolytic solution resistance because it has the above-mentioned configuration.

Hereinafter, the exterior material for electrical storage devices according to the present disclosure will be described in detail. In this specification, a numerical range indicated by the term "A to B" means "A or more" and "B or less". For example, the expression of "2 to 15 mm" means 2 mm or more and 15 mm or less.

For the exterior material for electrical storage devices according to the present disclosure, the phrase "corrosion-resistant film is observed in a strip shape " means that unevenness in thickness of the corrosion-resistant film is suppressed, specifically a portion of the cross-sectional observation image obtained using a scanning electron microscope, in which the ratio of the minimum thickness to the maximum thickness (minimum thickness/maximum thickness) in a region where the corrosion-resistant film is present is 30% or more, continuously extends over 1000 nm or more in a direction perpendicular to the thickness direction. When the portion in which the ratio of the minimum thickness to the maximum thickness (minimum thickness/maximum thickness) in a region where the corrosion-resistant film is present is 30% or more continuously extends over 1000 nm or more, it can be said that the uniformity in thickness of the acid resistance film formed on the entire surface of the barrier layer is high. The ratio is preferably 35% or more, more preferably 40% or more, still more preferably 48% or more. The ratio is, for example, 100% or less, 90% or less, or 89% or less. The ratio is preferably in the range of 30 to 100%, 30 to 90%, 30 to 89%, 35 to 100%, 35 to 90%, 35 to 89%, 40 to 100%, 40 to 90%, 40 to 89%, 48 to 100%, 48 to 90%, 48 to 89% or the like.

### 1. Laminated Structure and Physical Property of Exterior Material for Electrical Storage Devices

As shown in, for example, Fig. 1, an exterior material 10 for electrical storage devices according to the present disclosure includes a laminate including at least a base material layer 1, a barrier layer 3, an adhesive layer 5 and a heat-sealable resin layer 4 in this order. In the exterior material 10 for electrical storage devices, the base material layer 1 is on the outermost layer side, and the heat-sealable resin layer 4 is an innermost layer. In construction of the electrical storage device using the exterior material 10 for electrical storage devices and electrical storage device elements, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, the heat-sealable resin layer 4 is on the inner side with respect to the barrier layer 3, and the base material layer 1 is on the outer side with respect to the barrier layer 3.

As shown in, for example, Figs. 3 and 4, the exterior material 10 for electrical storage devices may have an adhesive agent layer 2 between the base material layer 1 and the barrier layer 3 if necessary for the purpose of, for example, improving bondability between these layers. As shown in Fig. 4, a surface coating layer 6 or the like may be provided on the outside of the base material layer 1 (on a side opposite to the heat-sealable resin layer 4 side) if necessary.

As shown in Figs. 1 to 4, a corrosion-resistant film 3a is formed on at least a surface of the barrier layer 3 on the adhesive layer 5 side. As shown in Figs. 2 to 4, a corrosion-resistant film 3b is formed on a surface of the barrier layer 3 on the base material layer 1 side. The compositions of the corrosion-resistant film 3a and the corrosion-resistant film 3b may be the same or different, and are preferably substantially the same. It is preferable that when a cross-sectional observation image of a thickness-direction cross-section of the corrosion-resistant film 3b is acquired using a scanning electron microscope, the corrosion-resistant film is observed in a strip shape on the cross-sectional observation image not only in the corrosion-resistant film 3a but also in the corrosion-resistant film 3b.

The thickness of the laminate forming the exterior material 10 for electrical storage devices is not particularly limited, and is preferably about 180 µm or less, about 155 µm or less, or about 120 µm or less, from the viewpoint of cost reduction, energy density improvement, and the like. The thickness of the laminate forming the exterior material 10 for electrical storage devices is preferably about 35 µm or more, about 45 µm or more, or about 60 µm or more, from the viewpoint of maintaining the function of an exterior material for electrical storage devices, which is protection of an electrical storage device element. The laminate forming the exterior material 10 for electrical storage devices is preferably in the range of, for example, about 35 to 180 µm, about 35 to 155 µm, about 35 to 120 µm, about 45 to 180 µm, about 45 to 155 µm, about 45 to 120 µm, about 60 to 180 µm, about 60 to 155 µm, and about 60 to 120 µm, particularly preferably about 60 to 155 µm.

In the exterior material 10 for electrical storage devices, the ratio of the total thickness of the base material layer 1, the adhesive agent layer 2 provided if necessary, the barrier layer 3, the adhesive layer 5, the heat-sealable resin layer 4, and the surface coating layer 6 provided if necessary to the thickness (total thickness) of the laminate forming the exterior material 10 for electrical storage devices is preferably 90% or more, more preferably 95% or more, still more preferably 98% or more. As a specific example, when the exterior material 10 for electrical storage devices according to the present disclosure includes the base material layer 1, the adhesive agent layer 2, the barrier layer 3, the adhesive layer 5 and the heat-sealable resin layer 4, the ratio of the total thickness of these layers to the thickness (total thickness) of the laminate forming the exterior material 10 for electrical storage devices is preferably 90% or more, more preferably 95% or more, still more preferably 98% or more.

### <Initial adhesion>

In the exterior material 10 for electrical storage devices according to the present disclosure, the initial adhesion (peeling strength) measured by the following measurement method is preferably about 10.0 N/15 mm or more, more preferably about 11.0 N/15 mm or more, still more preferably about 11.9 mm or more, even more preferably about 12.0 N/15 mm or more. In the exterior material 10 for electrical storage devices according to the present disclosure, the initial adhesion (peeling strength) is preferably about 35.0 N/15 mm or less, more preferably about 30.0 N/15 mm or less, still more preferably about 12.8 N/15 mm or less. The initial adhesion (peeling strength) in the exterior material 10 for electrical storage devices according to the present disclosure is preferably in the range of about 10.0 to 35.0 N/15 mm, about 10.0 to 30.0 N/15 mm, about 10.0 to 12.8 N/15 mm, about 11.0 to 35.0 N/15 mm, about 11.0 to 30.0 N/15 mm, about 11.0 to 12.8 N/15 mm, about 11.9 to 35.0 N/15 mm, about 11.9 to 30.0 N/15 mm, about 11.9 to 12.8 N/15 mm, about 12.0 to 35.0 N/15 mm, about 12.0 to 30.0 N/15 mm, about 12.0 to 12.8 N/15 mm, or the like.

The exterior material for electrical storage devices is cut to a size of 15 mm (MD) and 100 mm (TD) to obtain a test sample. Next, the test piece is delaminated between the heat-sealable resin layer and the barrier layer, the heat-sealable resin layer and the barrier layer are drawn in a direction of 180° at a gauge distance of 50 mm and a speed of 50 mm/min using a tensile tester (e.g. AGS-XPlus (trade name) manufactured by Shimadzu Corporation), the peeling strength (N/15 mm) of the test piece is measured, and the strength at the time of reaching a gauge distance of 65 mm is taken as initial adhesion. In delamination of the test piece T between the heat-sealable resin layer and the barrier layer, the adhesive layer situated between these layers is laminated on one or both of the heat-sealable resin layer and the barrier layer.

### <Adhesion when electrolytic solution is not sufficiently washed off after immersion in hydrous electrolytic solution for 24 hours>

In the exterior material 10 for electrical storage devices according to the present disclosure, the adhesion (peeling strength) after immersion in a hydrous electrolytic solution for 24 hour is preferably about 2.5 N/15 mm or more, more preferably about 2.8 N/15 mm or more, still more preferably about 3.0 N/15 mm or more, even more preferably about 4.0 N/15 mm or more, even more preferably about 5.0 N/15 mm or more, particularly preferably about 10.0 N/15 mm or more as measured by the following method for measuring adhesion. The adhesion (peeling strength) immediately after take-out is, for example, 30.0 N/15 mm or less, 25.0 N/15 mm or less, or 12.0 N/15 mm or less. The adhesion (peeling strength) of the exterior material 10 for electrical storage devices according to the present disclosure immediately after the take-out is preferably in the range of about 2.5 to 30.0 N/15 mm, about 2.5 to 25.0 N/15 mm, about 2.5 to 12.0 N/15 mm, about 2.8 to 30.0 N/15 mm, about 2.8 to 25.0 N/15 mm, about 2.8 to 12.0 N/15 mm, about 3.0 to 30.0 N/15 mm, about 3.0 to 25.0 N/15 mm, about 3.0 to 12.0 N/15 mm, about 4.0 to 30.0 N/15 mm, about 4.0 to 25.0 N/15 mm, about 4.0 to 12.0 N/15 mm, about 5.0 to 30.0 N/15 mm, about 5.0 to 25.0 N/15 mm, about 5.0 to 12.0 N/15 mm, about 10.0 to 30.0 N/15 mm, about 10.0 to 25.0 N/15 mm, about 10.0 to 12.0 N/15 mm, or the like.

Each exterior material for electrical storage devices is cut to a size of 15 mm (TD: transverse direction, lateral direction) or 100 mm (MD: machine Direction, longitudinal direction), and the test piece is delaminated between the heat-sealable resin layer and the barrier layer by about 10 mm to obtain a test piece. The test piece, and then an electrolytic solution (obtained by mixing phosphate hexafluoride with a mixed solution of ethylene carbonate, diethyl carbonate and dimethyl carbonate at a volume ratio of 1 : 1 : 1 (concentration in solution: 1 × 10³ mol/m³), moisture concentration: 1000 ppm) are put in a glass bottle to immerse the entire test piece in the hydrous electrolytic solution. In this state, the glass bottle is sealed with a lid. The sealed glass bottle is placed in an oven set at 85°C and is allowed to stand for 24 hours. Next, the glass bottle is taken out from the oven, and the test piece is immediately taken out from the hydrous electrolytic solution, washed with water at 25°C, and immersed in water at 25°C in the container.

Next, the test piece taken out from the water at 25°C is delaminated between the heat-sealable resin layer and the barrier layer, the adhesive layer and the barrier layer of the test piece are drawn in a direction of 180° at a gauge distance of 50 mm and a speed of 50 mm/min using a tensile tester (AGS-XPlus (trade name) manufactured by Shimadzu Corporation), the peeling strength (N/15 mm) of the test piece is measured. The measurement of the peeling strength of the test piece is performed 10 minutes after the test piece is taken out from the hydrous electrolytic solution and when the surface of the test piece is wet with water (i.e. the time for immersing the test piece in water is 10 minutes, and at this time, the electrolytic solution is not sufficiently washed from the exterior material for electrical storage devices). The strength at a gauge length of 65 mm is taken as peeling strength immediately after "take-out".

### <Adhesion when electrolytic solution is sufficiently washed off after immersion in water for 3 hours after immersion in hydrous electrolytic solution for 24 hours>

In the exterior material 10 for electrical storage devices according to the present disclosure, the adhesion (taken as "peeling strength 3 hours after immersion in water") is preferably about 10.0 N/15 mm or more, more preferably about 11.0 N/15 mm or more, still more preferably about 12.0 N/15 mm or more as measured after the test piece is immersed in water at 25°C in the container for 3 hours after the test piece taken out from the hydrous electrolytic solution is washed with water in the method for measuring <adhesion after immersion in hydrous electrolytic solution for 24 hours> above. The adhesion (peeling strength) is, for example, about 30.0 N/15 mm or less, or about 35.0 N/15 mm or less. The adhesion (peeling strength) of the exterior material 10 for electrical storage devices according to the present disclosure is preferably in the range of about 10.0 to 30.0 N/15 mm, about 11.0 to 30.0 N/15 mm, about 12.0 to 30.0 N/15 mm, or 10.2 to 14.5 N/15 mm. For the adhesion (peeling strength), the peeling strength is measured in the same manner as in the method for measuring <adhesion after immersion in hydrous electrolytic solution for 24 hours> above except that the test piece taken out from the hydrous electrolytic solution is immersed in water for 3 hours, so that the electrolytic solution permeating the test piece is dissolved in the water to eliminate swelling of the heat-sealable resin layer (due to permeation of the electrolytic solution) in the test piece, i.e. the adhesion is evaluated after the exterior material for electrical storage devices is immersed in water to sufficiently remove the electrolytic solution.

In the present disclosure, the maintenance of initial high adhesion between a barrier layer provided with a corrosion-resistant film and an adhesive layer means that, for example, when the adhesion before the exterior material for electrical storage devices is immersed in an electrolytic solution containing moisture (the initial adhesion (peeling strength)) is 100%, the adhesion (peeling strength) after immersion in water for 3 hours after immersion in the hydrous electrolytic solution for 24 hours is in the range of 80% to 120%.

### 2. Layers of exterior material for electrical storage devices

### [Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices.

The material that forms the base material layer 1 is not particularly limited as long as it has a function as a base material, i.e. at least insulation quality. The base material layer 1 can be formed using, for example, a resin, and the resin may contain additives described later.

When the base material layer 1 is formed of a resin, the base material layer 1 may be, for example, a resin film formed of a resin, or may be formed by applying a resin. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

Of these resins, polyester and polyamide are preferable as resins that form the base material layer 1.

Specific examples of the polyester resin include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 1 when the base material layer 1 is a resin film laminate with two or more layers.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 µm.

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the slipping agent is present on the surface of the base material layer 1, the amount of the slipping agent present is not particularly limited, and is preferably about 3 mg/m² or more, more preferably about 4 to 15 mg/m², still more preferably about 5 to 14 mg/m².

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is performed, and the thickness of the base material layer 1 is, for example, about 3 to 50 µm, preferably about 10 to 35 µm. When the base material layer 1 is a resin film laminate with two or more layers, the thickness of the resin film forming each layer is preferably about 2 to 25 µm.

### [Adhesive agent layer 2]

In the exterior material for electrical storage devices according to the present disclosure, the adhesive agent layer 2 is a layer provided between the base material layer 1 and the barrier layer 3 if necessary for the purpose of enhancing bondability between these layers.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a main component containing a polyol compound and a curing agent containing an isocyanate compound. The polyurethane adhesive is preferably a two-liquid curable polyurethane adhesive having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Examples of the curing agent include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. Since the adhesive agent layer 2 is formed of a polyurethane adhesive, excellent electrolytic solution resistance is imparted to the exterior material for electrical storage devices, so that peeling of the base material layer 1 is suppressed even if the electrolytic solution is deposited on the side surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and the thickness is, for example, about 1 µm or more, or about 2 µm or more. The thickness of the adhesive agent layer 2 is, for example, about 10 µm or less, or about 5 µm or less. The thickness of the adhesive agent layer 2 is preferably in the range of about 1 to 10 µm, about 1 to 5 µm, about 2 to 10 µm, or about 2 to 5 µm.

### [Colored layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive Agent Layer 2].

### [Barrier layer 3]

In the exterior material for electrical storage devices, the barrier layer 3 is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel sheets. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the exterior material for electrical storage devices, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 3 is a metal foil, the barrier layer 3 may perform a function as a barrier layer suppressing at least ingress of moisture, and has a thickness of, for example, about 9 to 200 µm. The thickness of the barrier layer 3 is preferably about 85 µm or less, more preferably about 50 µm or less, still more preferably about 40 µm or less, particularly preferably about 35 µm or less. The thickness of the barrier layer 3 is preferably about 10 µm or more, more preferably about 20 µm or more, still more preferably about 25 µm or more. The total thickness of the barrier layer 3 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 3 is formed of an aluminum alloy foil, the thickness thereof is especially preferably in above-described range. In particular, when the barrier layer 3 includes a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

### (Corrosion-resistant films 3a and 3b)

The exterior material 10 for electrical storage devices according to the present disclosure includes the corrosion-resistant film 3a on at least a surface of the barrier layer 3 on the adhesive layer 5 side. When a cross-sectional observation image of a thickness-direction cross-section of the corrosion-resistant film 3a is acquired using a scanning electron microscope, the corrosion-resistant film 3a is observed in a strip shape on the cross-sectional observation image. As described above, for the exterior material for electrical storage devices according to the present disclosure, the phrase "corrosion-resistant film is observed in a strip shape" means that specifically a portion of the cross-sectional observation image obtained using a scanning electron microscope, in which the ratio of the minimum thickness to the maximum thickness (minimum thickness/maximum thickness) in a region where the corrosion-resistant film 3a is present is 30% or more, continuously extends over 1000 nm or more in a direction perpendicular to the thickness direction. When the portion in which the ratio of the minimum thickness to the maximum thickness (minimum thickness/maximum thickness) in a region where the corrosion-resistant film is present is 30% or more continuously extends over 1000 nm or more, it can be said that the uniformity in thickness of the acid resistance film formed on the entire surface of the barrier layer is high. The ratio is preferably 35% or more, more preferably 40% or more. The ratio is, for example, 100% or less, 90% or less, or 89% or less. The ratio is preferably in the range of 30 to 100%, 30 to 90%, 30 to 89%, 35 to 100%, 35 to 90%, 35 to 89%, 40 to 100%, 40 to 90%, 40 to 89%, 48 to 100%, 48 to 90%, 48 to 89% or the like.

It is preferable that sea-island unevenness is not observed in the cross-sectional observation image of the corrosion-resistant film 3a. The "sea-island unevenness" means that island regions are in a sea region in the above-described cross-sectional observation image, for example, island portions are observed in a color darker than that of a sea portion (periphery). It is preferable that layer separation is not observed in the cross-sectional observation image of the corrosion-resistant film 3a. The layer separation of the corrosion-resistant film 3a means that a portion is observed in which the corrosion-resistant coating 3a is separated into two or more layers. When the layer separation is not observed, Cr is dispersed in the layer to enable maintenance of a state in which the film is more robustly crosslinked. When a more robust film can be maintained, it is possible to obtain high hydrofluoric acid resistance and electrolytic solution resistance even under severer conditions associated with swelling in the electrolytic solution. The cross-sectional observation image is an image acquired by fixing a measurement sample with an embedment resin, then preparing a section sample with a diamond blade in a microtome (UC7 manufactured by Leica Corporation), and observing a cross-section of the section sample with a scanning electron microscope in a STEM mode. The acceleration voltage is 30 kV, and the emission current is 10 µA.

For forming the corrosion-resistant film 3a in a strip shape on the surface of the barrier layer, for example, adjustment is performed by a method for applying a treatment liquid during formation of the corrosion-resistant film 3a, an ultimate temperature and an ultimate time during drying, whether or not a leveling agent is blended in the treatment liquid, a method for drying the treatment liquid, and the like. A method for suppressing layer separation and unevenness of the corrosion-resistant film 3a is carried out in parallel. The ultimate temperature means a temperature of the base material itself, which is an actual temperature of the base material measured by performing temperature measurement using a method with a thermocouple or the like.

Examples of the leveling agent include various surfactants such as cationic surfactants, anionic surfactants and nonionic surfactants, alcohols, and water-soluble organic solvents having a boiling point of 60 to 200°C. The content of the leveling agent is 10 vol% or less, preferably 5 vol% or less of the entire aqueous medium. Examples of the leveling agent include solvents such as alcohol, ketone and cellosolve-based water-soluble organic solvents, fluorine-based resins, and silicon-based resins. Specific examples of the solvent include alkane-based compounds such as hexane and pentane; aromatic compounds such as benzene and toluene; alcohol-based compounds such as ethanol, 1-butanol, methoxypropanol and ethyl cellosolve; ether-based compounds such as tetrahydrofuran and dioxane; ester-based compounds such as ethyl acetate and butoxyethyl acetate; amide-based compounds such as dimethylformamide and N-methylpyrrolidone; sulfone-based solvents such as dimethyl sulfoxide; and phosphoric acid amides such as hexamethylphosphoric acid triamide. Of these, one leveling agent, or two or more leveling agents may be used.

Heretofore, a known printing method such as a gravure coating method has been applied and a common heating and drying method has been employed without making an attempt to form a corrosion-resistant film such that the corrosion-resistant film 3a is observed in a strip shape on a cross-sectional observation image obtained using a scanning electron microscope. Thus, a conventional corrosion-resistant film is observed as an irregularity shape (non-strip shape) on a cross-sectional observation image obtained using a scanning electron microscope. For example, when the exterior material for electrical storage devices according to the present disclosure is immersed in a hydrous electrolytic solution, and the exterior material for electrical storage devices is then immersed in water to sufficiently remove the electrolytic solution, initial high adhesion (i.e. adhesion before immersion of the exterior material for electrical storage devices in the electrolytic solution containing moisture) between a barrier layer including a corrosion-resistant film and an adhesive layer cannot be maintained if the corrosion-resistant film has an irregularity shape as mentioned above. That is, the electrolytic solution resistance of the exterior material for electrical storage devices is not sufficient.

On the other hand, in the exterior material 10 for electrical storage devices according to the present disclosure, the corrosion-resistant film 3a is observed in a strip shape on the cross-sectional observation image when a cross-sectional observation image of a thickness-direction cross-section of the corrosion-resistant film 3a is acquired using a scanning electron microscope. Thus, the exterior material for electrical storage devices according to the present disclosure is excellent in electrolytic solution resistance. For example, when the exterior material for electrical storage devices according to the present disclosure is immersed in a hydrous electrolytic solution, and the exterior material for electrical storage devices is then immersed in water to sufficiently remove the electrolytic solution, initial high adhesion (i.e. adhesion before immersion of the exterior material for electrical storage devices in the electrolytic solution containing moisture) between a barrier layer including a corrosion-resistant film and an adhesive layer is maintained, so that the effect of being excellent in electrolytic solution resistance is exhibited.

The barrier layer 3 may include a corrosion-resistant film on each of both surfaces. As shown in Figs. 1 to 4, a corrosion-resistant film 3a is formed on at least a surface of the barrier layer 3 on the adhesive layer 5 side. As shown in Figs. 2 to 4, a corrosion-resistant film 3b is formed on a surface of the barrier layer 3 on the base material layer 1 side. The compositions of the corrosion-resistant film 3a and the corrosion-resistant film 3b may be the same or different, and are preferably substantially the same. It is preferable that when a cross-sectional observation image of a thickness-direction cross-section of the corrosion-resistant film 3b is acquired using a scanning electron microscope, the corrosion-resistant film is observed in a strip shape on the cross-sectional observation image not only in the corrosion-resistant film 3a but also in the corrosion-resistant film 3b. Further, it is also preferable that the aforementioned sea-island unevenness is not observed in the corrosion-resistant film 3b, and it is preferable that the aforementioned layer separation is not observed.

Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance to the barrier layer. In the present disclosure, one of treatments for forming the corrosion-resistant film may be performed, or two or more thereof may be performed in combination as long as at least the corrosion-resistant film 3a is formed. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In the present disclosure, the barrier layer 3 is regarded as including the corrosion-resistant film.

The corrosion-resistant films 3a and 3b exhibit the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a treatment method such as an alkali immersion method, an electrolytic cleaning method, an acid cleaning method, an electrolytic acid cleaning method or an acid activation method, and a treatment liquid containing a metal phosphate such as Cr (chromium) phosphate, Ti (titanium) phosphate, Zr (zirconium) phosphate or Zn (zinc) phosphate or a mixture of these metal salts as a main component, a treatment liquid containing any of non-metal salts of phosphoric acid and a mixture of these non-metal salts as a main component, or a treatment liquid formed of a mixture of any of these salts and a synthetic resin or the like is then applied to the degreased surface by a coating method such as a roll coating method, a gravure coating method or an immersion method, and dried. As described above, in the exterior material for electrical storage devices according to the present disclosure, a method for applying a treatment liquid during formation of the corrosion-resistant film 3a, an ultimate temperature and an ultimate time during drying, whether or not a leveling agent is blended in the treatment liquid, a method for drying the treatment liquid, and the like are adjusted in formation of the corrosion-resistant film.

As the treatment liquid for use in chemical conversion treatment, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

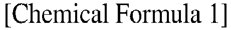

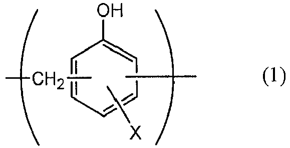

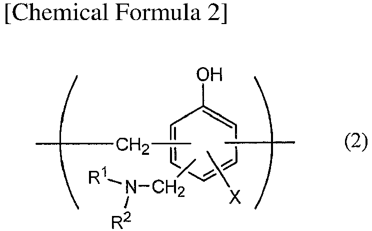

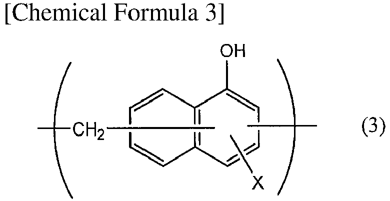

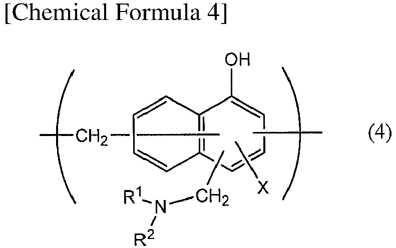

In the general formulae (1) to (4), X represents a hydrogen atom, a hydroxy group, an alkyl group, a hydroxyalkyl group, an allyl group, or a benzyl group. R¹ and R² are the same or different, and each represents a hydroxy group, an alkyl group, or a hydroxyalkyl group. In the general formulae (1) to (4), examples of the alkyl group represented by X, R¹ and R² include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R¹ and R² may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate. When such corrosion prevention treatment is employed, in the exterior material for electrical storage devices according to the present disclosure, a method for applying a treatment liquid during formation of the corrosion-resistant film 3a, an ultimate temperature and an ultimate time during drying, whether or not a leveling agent is blended in the treatment liquid, a method for drying the treatment liquid, and the like are adjusted in formation of the corrosion-resistant film.

Examples of the corrosion-resistant films 3a and 3b include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant films 3a and 3b may have a laminated structure in which at least one of a cationic polymer and an anionic polymer is further laminated if necessary. Examples of the cationic polymer and the anionic polymer include those described above.

The composition of the corrosion-resistant films 3a and 3b can be analyzed by, for example, time-of-flight secondary ion mass spectrometry.

Examples of preferred compositions of the chemical conversion treatment liquid for forming the corrosion-resistant film include compositions of treatment liquids containing an acrylic resin such as polyacrylic acid, chromium nitrate, and phosphoric acid, and treatment liquids containing a phenol-based resin polymer, chromium fluoride, and phosphoric acid.

The acrylic resin can be obtained by addition polymerization using an unsaturated acrylic monomer. The acrylic resin may be either a homopolymer or a copolymer of an acrylic monomer, but its polymerization form is not particularly limited as long as the polymer can be stably present in the surface treatment agent. Examples of the acrylic monomer include methyl acrylate, methyl methacrylate, ethyl acrylate, ethyl methacrylate, isopropyl methacrylate, n-butyl methacrylate, isobutyl methacrylate, n-hexyl methacrylate, 2-ethylhexyl acrylate, acrylic acid, methacrylic acid, 2-hydroxyethyl acrylate, hydroxypropyl acrylate, 2-hydroxyethyl methacrylate, hydroxypropyl methacrylate, maleic acid, itaconic acid, acrylamide, N-methylol acrylamide, diacetone acrylamide, glycidyl acrylate, glycidyl methacrylate, styrene, acrylamide, acrylonitrile, and polyethylene glycol methacrylate. As the acrylic resin, an acid monomer of acrylic acid or methacrylic acid may be used alone. An anionic acrylic resin made aqueous with carboxylic acid with such an acid monomer incorporated into any of the above-described monomers may be used. A cationic acrylic resin made aqueous by combining any of the above-described acrylic monomers with a cationic monomer having an amino group, such as alkylamino (meth)acrylate such as N,N-dimethylaminopropyl acrylate or N-methylaminoethyl methacrylate may be used.

Examples of the phenol resin include polycondensates of phenols (phenol, naphthol, bisphenol and the like) and formaldehyde in which a (substituted) aminomethyl group is bonded to a ring of the phenol. Examples thereof include resoe having a methylol group which is self-condensed.

The amount of the corrosion-resistant films 3a and 3b to be formed on the surface of the barrier layer 3 in the chemical conversion treatment is not particularly limited, but for example when the coating-type chromate treatment is performed, and it is desirable that the chromic acid compound be contained in an amount of, for example, about 0.5 to 50 mg, preferably about 1.0 mg to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 mg to 150 mg, per 1 m² of the surface of the barrier layer 3.

The thickness of the corrosion-resistant films 3a and 3b is not particularly limited, and is preferably about 1 nm to 20 µm, more preferably about 1 nm to 100 nm, still more preferably about 1 nm to 65 nm, even more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and scanning electron microscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected. The thickness described here is an average value of the minimum thickness and the maximum thickness (the measurement range extend over 1000 nm or more in a direction perpendicular to the thickness direction of the corrosion-resistant films 3a and 3b).

The chemical conversion treatment is performed in the following manner: a solution containing a compound to be used for formation of the corrosion-resistant films 3a and 3b is applied to the surface of the barrier layer by a bar coating method, a roll coating method, a gravure coating method, an immersion method or the like, and heating (drying) is then performed so that the temperature of the barrier layer is about 70 to about 200°C. In particular, in the exterior material 10 for electrical storage devices according to the present disclosure, it is preferable that the ultimate temperature of the barrier layer 3 during heating of the treatment liquid is about 180 to 200°C and the ultimate time at the temperature is about 1 to 120 seconds for forming the corrosion-resistant films 3a and 3b in the strip shape. By suppressing bumping caused by heating of the treatment liquid applied to the surface of the barrier layer, the corrosion-resistant films 3a and 3b can be suitably formed in the strip shape. Further, in the method for applying the treatment liquid, for example, it is desirable that coating by direct gravure be performed in combination with planarization of the film by a smoothing roll immediately after the coating to enhance the smoothness of the treatment liquid on the surface of the barrier layer as compared to that obtained by a general coating method. By mere application of a treatment liquid to the surface of the barrier layer as in a common gravure coating method, the corrosion-resistant film is formed in an irregularity shape rather than the strip shape. When a common gravure coating method is employed, it is necessary to enhance the smoothness of the treatment liquid on the surface of the barrier layer by, for example, blending the above-described leveling agent in the treatment liquid. For example, when direct gravure coating is performed in combination with smoothing, the ultimate temperature of the barrier layer 3 during heating of the treatment liquid is set to about 180 to 200°C, and the ultimate time at the temperature is set to, for example, 3 seconds or less, the corrosion-resistant film is formed in a strip shape and occurrence of layer separation and sea-islands is easily suppressed even without use of a leveling agent. On the other hand, if the ultimate time is long, layer separation and sea-island unevenness are likely to be formed on the corrosion-resistant film.

Drying is performed without washing with water after the treatment liquid is applied to the surface of the barrier layer 3. The drying method is not particularly limited, and examples thereof include drying methods using a batch-type drying furnace, a continuous hot air circulation-type drying furnace, a conveyor-type hot air drying furnace, an electromagnetic induction heating furnace with an IH heater, or the like. The air volume, the wind speed and the like for the drying method are arbitrarily set.

The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### [Heat-sealable resin layer 4]

In the exterior material for electrical storage devices according to the present disclosure, the heat-sealable resin layer 4 is a layer (sealant layer) which corresponds to an innermost layer and performs a function of hermetically sealing the electrical storage device element by heat-sealing the heat-sealable resin layer during construction of the electrical storage device.

The resin forming the heat-sealable resin layer 4 is not particularly limited as long as it can be heat-sealed, a resin containing a polyolefin backbone such as a polyolefin or an acid-modified polyolefin is preferable. The resin forming the heat-sealable resin layer 4 can be confirmed to contain a polyolefin backbone by an analysis method such as infrared spectroscopy or gas chromatography-mass spectrometry. In addition, it is preferable that a peak derived from maleic anhydride is detected when the resin forming the heat-sealable resin layer 4 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the heat-sealable resin layer 4 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 4 may be formed from one resin alone, or may be formed from a blend polymer obtained by combining two or more resins. Further, the heat-sealable resin layer 4 may be composed of only one layer, or may be composed of two or more layers with the same resin component or different resin components.

The heat-sealable resin layer 4 may contain a slipping agent etc. if necessary. When the heat-sealable resin layer 4 contains a slipping agent, the moldability of the exterior material for electrical storage devices can be improved. The slipping agent is not particularly limited, and a known slipping agent can be used. The slipping agents may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

When a slipping agent is present on the surface of the first heat-sealable resin layer 4, the amount of the slipping agent present is not particularly limited, and is preferably about 10 to 50 mg/m², more preferably about 15 to 40 mg/m² from the viewpoint of improving the moldability of the exterior material for electrical storage devices.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to each other to perform a function of sealing the electrical storage device element, and the thickness is, for example, about 100 µm or less, preferably about 85 µm or less, more preferably about 15 to 85 µm. For example, when the thickness of the adhesive layer 5 described later is 10 µm or more, the thickness of the heat-sealable resin layer 4 is preferably about 85 µm or less, more preferably about 15 to 45 µm. For example, when the thickness of the adhesive layer 5 described later is less than 10 µm or the adhesive layer 5 is not provided, the thickness of the heat-sealable resin layer 4 is preferably about 20 µm or more, more preferably about 35 to 85 µm.

### [Adhesive layer 5]

In the exterior material for electrical storage devices according to the present disclosure, the adhesive layer 5 is a layer provided between the barrier layer 3 (or corrosion-resistant film) and the heat-sealable resin layer 4 for firmly bonding these layers to each other. The adhesive layer 5 is preferably in contact with the acid-resistant film 3a.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2. From the viewpoint of firmly bonding the adhesive layer 5 to the heat-sealable resin layer 4, it is preferable that the resin to be used for forming the adhesive layer 5 contains a polyolefin backbone. Examples thereof include the polyolefins and acid-modified polyolefins exemplified for the heat-sealable resin layer 4 described above. On the other hand, from the viewpoint of firmly bonding the barrier layer 3 and the adhesive layer 5 to each other, it is preferable that the adhesive layer 5 contains an acid-modified polyolefin. Examples of the acid modifying component include dicarboxylic acids such as maleic acid, itaconic acid, succinic acid and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for electrical storage devices, the olefin component is preferably a polypropylene-based resin, and it is most preferable that the adhesive layer 5 contains maleic anhydride-modified polypropylene.

The resin forming the adhesive layer 5 can be confirmed to contain a polyolefin backbone by an analysis method such as infrared spectroscopy, gas chromatography-mass spectrometry, and the analysis method is not particularly limited. The resin forming the adhesive layer 5 is confirmed to contain an acid-modified polyolefin, for example, when peaks derived from maleic anhydride are detected near wavenumbers of 1760 cm⁻¹ and 1780 cm⁻¹ when a maleic anhydride-modified polyolefin is measured by infrared spectroscopy. However, if the degree of acid modification is low, the peaks may be too small to be detected. In that case, the peaks can be analyzed by nuclear magnetic resonance spectroscopy.

Further, from the viewpoint of securing durability, such as heat resistance and content resistance and securing moldability, of the exterior material for electrical storage devices while reducing the thickness, the adhesive layer 5 is more preferably a cured product of a resin composition containing an acid-modified polyolefin and a curing agent. Preferred examples of the acid-modified polyolefin include those described above.

The adhesive layer 5 is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the first present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 5 may contain a modifier having a carbodiimide group.

The thickness of the adhesive layer 5 is preferably about 50 µm or less, about 40 µm or less, about 30 µm or less, about 20 µm or less, or about 5 µm or less. The thickness of the adhesive layer 5 is preferably about 0.1 µm or more, or about 0.5 µm or more. The thickness of the adhesive layer 5 is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm in the case of the adhesive exemplified for the adhesive agent layer 2 or a cured product of an acid-modified polyolefin with a curing agent. When any of the resins exemplified for the heat-sealable resin layer 4 is used, the thickness of the adhesive layer is preferably about 2 to 50 µm, more preferably about 10 to 40 µm. When the adhesive layer 5 is a cured product of a resin composition containing the adhesive exemplified for the adhesive agent layer 2 or an acid-modified polyolefin and a curing agent, the adhesive layer 5 can be formed by, for example, applying the resin composition and curing the resin composition by heating or the like. When the resin exemplified for the heat-sealable resin layer 4 is used, for example, extrusion molding of the heat-sealable resin layer 4 and the adhesive layer 5 can be performed.

### [Surface coating layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the power storage device is constructed using the exterior material for electrical storage devices.

The surface coating layer 6 can be formed from, for example, a resin such as polyvinylidene chloride, polyester, polyurethane, acrylic resin or epoxy resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a main component containing a polyol compound and a curing agent containing an isocyanate compound. The polyurethane is preferably two-liquid curable polyurethane having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Examples of the curing agent include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer 6 is formed of polyurethane, excellent electrolytic solution resistance is imparted to the exterior material for electrical storage devices.

If necessary, the surface coating layer 6 may contain additives such as the slipping agent, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 µm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 µm, preferably about 1 to 5 µm.

### 3. Method for manufacturing exterior material for electrical storage devices

The method for manufacturing an exterior material for electrical storage devices is not particularly limited as long as a laminate is obtained in which the layers of the exterior material for electrical storage devices according to the present invention are laminated. Examples thereof include a method including the step of laminating at least the base material layer 1, the barrier layer 3 and the heat-sealable resin layer 4 in this order.

An example of the method for manufacturing the exterior material for electrical storage devices of the present invention is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured. As the barrier layer 3, a barrier layer on which the corrosion-resistant film 3a (and the corrosion-resistant film 3b) is formed in advance is used.

Then, the adhesive layer 5 and the heat-sealable resin layer 4 is laminated on the barrier layer 3 of the laminate A. Mention is made of, for example, (1) a method in which the adhesive layer 5 and the heat-sealable resin layer 4 are extruded to be laminated on the barrier layer 3 of the laminate A (extrusion lamination method or tandem lamination method); (2) a method in which the adhesive layer 5 and the heat-sealable resin layer 4 are laminated to form a laminate separately, and the laminate is laminated on the barrier layer 3 of the laminate A by a thermal lamination method, or a method in which a laminate with the adhesive layer 5 laminated on the barrier layer 3 of the laminate A is formed, and laminated to the heat-sealable resin layer 4 by a thermal lamination method; (3) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded together with the adhesive layer 5 interposed therebetween (sandwich lamination); and (4) an adhesive for forming the adhesive layer 5 is applied by solution coating and dried or baked to laminate the adhesive on the barrier layer 3 of the laminate A, and the heat-sealable resin layer 4 formed in a sheet shape in advance is laminated on the adhesive layer 5.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3 (including the corrosion-resistant film 3a on at least the adhesive layer 5 side), the adhesive layer 5, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can be improved.

### 4. Uses of Exterior Material for Electrical Storage Devices

The exterior material for electrical storage devices according to the present disclosure is used as a packaging for hermetically sealing and storing electrical storage device elements such as a positive electrode, a negative electrode and an electrolyte. That is, in a packaging formed of the exterior material for electrical storage devices according to the present disclosure, an electrical storage device element including at least a positive electrode, a negative electrode and an electrolyte can be stored to obtain an electrical storage device.

Specifically, an electrical storage device element including at least a positive electrode, a negative electrode and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is stored in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral edge portions of the superposed exterior materials for electrical storage devices to form a packaging. Alternatively, as in the example shown in Fig. 13, one exterior material for electrical storage devices may be folded over itself, followed by heat-sealing the peripheral edge portions to form a packaging. When the exterior material is folded over itself, a packaging may be formed by three-side sealing with the exterior material heat-sealed at sides other than the folding side as in the example shown in Fig. 13, or may be subjected to four-side sealing with the exterior material folded in such a manner that a flange portion can be formed. In the exterior material for electrical storage devices, a concave portion for housing an electrical storage device element may be formed by deep drawing molding or bulging molding. As in the example shown in Fig. 13, one exterior material for electrical storage devices may be provided with a concave portion while the other exterior material for electrical storage devices is not provided a concave portion, or the other exterior material for electrical storage devices may also be provided with a concave portion.

The exterior material for electrical storage devices according to the present disclosure can be suitably used for electrical storage devices such as batteries (including condensers, capacitors and the like.). The exterior material for electrical storage devices according to the present disclosure may be used for either primary batteries or secondary batteries, and is preferably used for secondary batteries. The type of a secondary battery to which the exterior material for electrical storage devices according to the present disclosure is applied is not particularly limited, and examples thereof include lithium ion batteries, lithium ion polymer batteries, solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

### EXAMPLES

Hereinafter, the present disclosure will be described in detail by way of examples and comparative examples. It is to be noted that the present disclosure is not limited to examples.

### <Manufacturing of exterior material for electrical storage devices>

### Example 1

A biaxially stretched nylon film (25 µm) was prepared as a base material layer. As a barrier layer, an aluminum alloy foil (JIS H4160: 1994 A8021 H-O, thickness: 40 µm) provided with a corrosion-resistant film (thickness: 30 nm) by subjecting both surfaces to chemical conversion treatment under the formation conditions (coating method, ultimate temperature, ultimate temperature, ultimate time, existence or non-existence of a leveling agent, and drying method) shown in Table 2. As the chemical conversion treatment liquid, a treatment liquid containing 2 parts by mass of an acryl-based resin (polyacrylic acid (molecular weight: 10,000, acid value: 778)), 2 parts by mass of chromium nitrate and 2 parts by mass of phosphoric acid based on 100 parts by mass of water was prepared. In Table 1, the ultimate temperature is a maximum temperature the surface of the aluminum alloy foil has reached, and the ultimate time is a time required for the temperature of the aluminum alloy foil to reach the ultimate temperature from normal temperature (25°C).

The base material layer and the barrier layer were laminated by a dry lamination method. Specifically, a two-liquid urethane adhesive (polyol compound and aromatic isocyanate-based compound) was applied to one surface of the aluminum foil including a corrosion-resistant film, so that an adhesive agent layer (thickness: 3 µm) was formed. Subsequently, the adhesive agent layer on the barrier layer including a corrosion-resistant film and the biaxially stretched nylon film of the base material layer were laminated, and aging treatment was then performed to prepare a laminate of a biaxially stretched nylon film, an adhesive agent layer, and a barrier layer including a corrosion-resistant film on both surfaces.

Next, by a dry lamination method, the barrier layer of the laminate and the heat-sealable resin layer were laminated with an adhesive layer interposed therebetween. Specifically, a resin composition containing maleic anhydride-modified polypropylene (molecular weight: 70,000) and an epoxy-based curing agent (bisphenol A diglycidyl ether) at a mass ratio of 100 : 3 was applied to a surface of the laminate on the barrier layer side (the surface of the corrosion-resistant film) to a thickness of 2 µm after curing, and dried. Next, a random polypropylene film (thickness: 40 µm) as a heat-sealable resin layer was laminated, and the obtained laminate was subjected to aging treatment to obtain an exterior material for electrical storage devices in which a base material layer (25 µm), an adhesive agent layer (3 µm), a barrier layer (40 µm) including a corrosion-resistant film (41 nm) on both surfaces, an adhesive layer (2 µm) and a heat-sealable resin layer (40 µm) were laminated in this order.

### Example 2

Except that as the chemical conversion treatment liquid, a treatment liquid containing 2 parts by mass of an acrylic resin (polyacrylic acid (molecular weight: 10,000, acid value: 778)), 2 parts by mass of chromium nitrate, 2 parts by mass of phosphoric acid and 1 part by mass of a leveling agent (methoxypropanol) based on 100 parts by mass of water was used, and the conditions for formation of the corrosion-resistant film were as shown in Table 2, the same procedure as in Example 1 was carried out to obtain an exterior material for electrical storage devices in which a base material layer (25 µm), an adhesive agent layer (3 µm), a barrier layer (40 µm) including a corrosion-resistant film (29 nm) on both surfaces, an adhesive layer (2 µm) and a heat-sealable resin layer (40 µm) were laminated in this order.

### Example 3

Except that the conditions for formation of the corrosion-resistant film were as shown in Table 2, the same procedure as in Example 1 was carried out to obtain an exterior material for electrical storage devices in which a base material layer (25 µm), an adhesive agent layer (3 µm), a barrier layer (40 µm) including corrosion-resistant film (33 nm) on both surfaces, an adhesive layer (2 µm) and a heat-sealable resin layer (40 µm) were laminated in this order.

### Example 4

Except that as the chemical conversion treatment liquid, a treatment liquid containing 2 parts by mass of an acrylic resin (polyacrylic acid (molecular weight: 10,000, acid value: 778)), 2 parts by mass of chromium nitrate and 2 parts by mass of phosphoric acid based on 100 parts by mass of water was used, and the conditions for formation of the corrosion-resistant film were as shown in Table 2, the same procedure as in Example 1 was carried out to obtain an exterior material for electrical storage devices in which a base material layer (25 µm), an adhesive agent layer (3 µm), a barrier layer (40 µm) including a corrosion-resistant film (33 nm) on both surfaces, an adhesive layer (2 µm) and a heat-sealable resin layer (40 µm) were laminated in this order. In the corrosion-resistant film of the exterior material for electrical storage devices which was obtained in Example 4, sea-island unevenness described later (island portions are observed in a color darker than that of the periphery in a cross-sectional observation image (scanning transmission electron microscope (STEM) image); see the image of Fig. 8), and the minimum size of the island portions was 11 nm long and 11 nm wide.

### Example 5

Except that as the chemical conversion treatment liquid, a treatment liquid containing 42 parts by mass of a phenol-based resin polymer, 16 parts by mass of chromium fluoride, 13 parts by mass of phosphoric acid and 1 part by mass of a leveling agent (ethanol) based on 100 parts by mass of water was used, the conditions for formation of the corrosion-resistant film were as shown in Table 2, and the adhesive layer was formed using a resin composition containing 3.3 parts by mass of an isocyanate-based curing agent (HDI) based on 100 parts by mass of maleic anhydride-modified polypropylene (molecular weight: 70,000), the same procedure as in Example 1 was carried out to obtain an exterior material for electrical storage devices in which a base material layer (25 µm), an adhesive agent layer (3 µm), a barrier layer (40 µm) including a corrosion-resistant film (64 nm) on both surfaces, an adhesive layer (2 µm) and a heat-sealable resin layer (40 µm) were laminated in this order.

### Comparative Example 1

Except that as the chemical conversion treatment liquid, a treatment liquid containing 2 parts by mass of an acrylic resin (polyacrylic acid (molecular weight: 10,000, acid value: 778)), 2 parts by mass of chromium nitrate and 2 parts by mass of phosphoric acid based on 100 parts by mass of water was used, and the conditions for formation of the corrosion-resistant film were as shown in Table 2, the same procedure as in Example 1 was carried out to obtain an exterior material for electrical storage devices in which a base material layer (25 µm), an adhesive agent layer (3 µm), a barrier layer (40 µm) including a corrosion-resistant film (73 nm) on both surfaces, an adhesive layer (2 µm) and a heat-sealable resin layer (40 µm) were laminated in this order. In the corrosion-resistant film of the exterior material for electrical storage devices which was obtained in Comparative Example 1, sea-island unevenness described later (island portions are observed in a color darker than that of the periphery in a cross-sectional observation image (STEM image); see the image of Fig. 11), and the minimum size of the island portions was 21 nm long and 54 nm wide. In the corrosion-resistant film of Comparative Example 1, bumping marks (vacant portions) in drying of the treatment liquid were observed, and the aspect ratio of such a bumping mark was 0.17.

### Comparative Example 2

Except that as the chemical conversion treatment liquid, a treatment liquid containing 2 parts by mass of an acrylic resin (polyacrylic acid (molecular weight: 10,000, acid value: 778)), 2 parts by mass of chromium nitrate and 2 parts by mass of phosphoric acid based on 100 parts by mass of water was used, the same procedure as in Example 2 was carried out to obtain an exterior material for electrical storage devices in which a base material layer (25 µm), an adhesive agent layer (3 µm), a barrier layer (40 µm) including a corrosion-resistant film (120 nm) on both surfaces, an adhesive layer (2 µm) and a heat-sealable resin layer (40 µm) were laminated in this order. In the corrosion-resistant film of the exterior material for electrical storage devices which was obtained in Comparative Example 2, sea-island unevenness described later (island portions are observed in a color darker than that of the periphery in a cross-sectional observation image (STEM image); see the image of Fig. 12), and the minimum size of the island portions was 27 nm long and 83 nm wide. In the corrosion-resistant film of Comparative Example 2, bumping marks (vacant portions) in drying of the treatment liquid were observed, and the aspect ratio of such a bumping mark was 0.21.

### <Observation of corrosion-resistant film>

Under the following conditions, a cross-sectional observation image (STEM image) of a thickness-direction cross section of the corrosion-resistant film formed on the surface of the barrier layer in each of examples and comparative examples was acquired using a scanning electron microscope, and the cross-sectional shape of the corrosion-resistant film, existence or non-existence of bumping marks, occurrence or non-occurrence of layer separation, and existence or non-existence of sea-island unevenness were observed. Table 1 shows the results. The cross-sectional observation images acquired in Example 1 to 5 and Comparative Examples 1 and 2 are shown in Figs. 5 to 12, respectively. It is to be noted that the thickness value of 1: Y or 2: Y shown in Figs. 5 and 7 to 11 does not mean the maximum thickness or the minimum thickness, but results from remaining of the bar scale during acquisition of the image, and has no particular significance.

### <Cross-sectional observation>

For observing the cross-sectional shape of the corrosion-resistant film, existence or non-existence of bumping marks, occurrence or non-occurrence of layer separation, and existence or non-existence of sea-island unevenness, an image was acquired by the following method. First, a sample was collected from the center portion with respect to the width direction of each of the obtained exterior materials for electrical storage devices, and fixed with a plastic plate, and a section sample of each of the exterior material for electrical storage devices was cut out with a microtome (finish cut thickness: 80 nm). Next, a cross-section image of the obtained section sample of each exterior material for electrical storage devices was acquired by STEM mode observation (acceleration voltage: 30 kV, emission current: 10 µA) using a scanning electron microscope (S-4800 manufactured by Hitachi High-Technologies Corporation).

Except that the scanning electron microscope is changed from S-4800 manufactured by Hitachi High-Technologies Corporation to newly marketed SU-9000 manufactured by Hitachi High-Technologies Corporation, the same procedure was carried out to obtain a cross-sectional observation image (STEM image) was acquired using a scanning electron microscope for a thickness-direction cross-section of the corrosion-resistant film formed on the surface of the barrier layer in Example 2, and the cross-sectional shape of the corrosion-resistant film, existence or non-existence of bumping marks, occurrence or non-occurrence of layer separation, and existence or non-existence of sea-island unevenness were observed. Table 1 shows the results as Example 6.

In each of the cross-sectional observation images of Examples 1 to 6 and Comparative Examples 1 and 2, the ratio of the minimum thickness to the maximum thickness (minimum thickness/maximum thickness) in a region (width: 1000 nm) where the corrosion-resistant film is present was 59% in Example 1, 65% in Example 2 (Example 6), 60% in Example 3, 48% in Example 4, 89% in Example 5, 17% in Comparative Example 1 and 21% in Comparative Example 2 as shown in Table 1. That is, the cross-sectional shape of the corrosion-resistant film in the cross-sectional observation image was a strip shape in Examples 1 to 5, and an irregularity shape in Comparative Examples 1 and 2.

**[Table 1]**

| | Thickness of corrosion-resistant film 3a | | | |
|---|---|---|---|---|
| | Maximum value (nm) | Minimum value (nm) | Maximum value/ minimum value (%) | Average value over range of 1000 nm (µm) |
| Example 1 | 51 | 30 | 59 | 41 |
| Example 2 | 35 | 23 | 65 | 29 |
| Example 3 | 42 | 25 | 60 | 33 |
| Example 4 | 42 | 25 | 48 | 33 |
| Example 5 | 68 | 60 | 89 | 64 |
| Example 6* | 49 | 32 | 65 | 41 |
| Comparative Example 1 | 125 | 21 | 17 | 73 |
| Comparative Example 2 | 198 | 42 | 21 | 120 |

| | | | | |
|---|---|---|---|---|
| * In Table 1, the results of Example 6 are results of acquiring a cross-sectional observation image (STEM image) of a thickness-direction cross-section of the corrosion-resistant film formed on the surface of the barrier layer in Example 2, and observing the cross-sectional shape of the corrosion-resistant film, existence or non-existence of bumping marks, occurrence or non-occurrence of layer separation, and existence or non-existence of sea-island unevenness, where the cross-sectional observation image was acquired in the same manner except that the scanning electron microscope is changed from S-4800 manufactured by Hitachi High-Technologies Corporation to newly marketed SU-9000 manufactured by Hitachi High-Technologies Corporation. The results of Examples 2 and 6 show that substantially the same measurement result is obtained even when the scanning electron microscope is changed from S-4800 manufactured by Hitachi High-Technologies Corporation to newly marketed SU-9000 manufactured by Hitachi High-Technologies Corporation. | | | | |

### <Evaluation of adhesion>

The "adhesion after immersion in hydrous electrolytic solution for 24 hours", the "adhesion after immersion in water for 3 hours after immersion in hydrous electrolytic solution for 24 hours" and the "initial adhesion" were evaluated, respectively, by the following methods.

### (Adhesion after immersion in hydrous electrolytic solution for 24 hours)

First, each of the obtained exterior materials for electrical storage devices was cut to a size of 15 mm (TD: transverse direction, lateral direction) or 100 mm (MD: machine Direction, longitudinal direction), and the test piece was delaminated between the heat-sealable resin layer and the barrier layer by about 10 mm to obtain a test piece. The test piece, and then an electrolytic solution (obtained by mixing phosphate hexafluoride with a mixed solution of ethylene carbonate, diethyl carbonate and dimethyl carbonate at a volume ratio of 1 : 1 : 1 (concentration in solution: 1 × 10³ mol/m³), moisture concentration: 1000 ppm) were put in a glass bottle to immerse the entire test piece in the hydrous electrolytic solution. In this state, the glass bottle was sealed with a lid. The sealed glass bottle was placed in an oven set at 85°C and is allowed to stand for 24 hours. Next, the glass bottle was taken out from the oven, and the test piece was immediately taken out from the glass bottle, washed with water at 25°C, and then immersed in a container containing water at 25°C.

Next, the test piece taken out from the water was delaminated between the heat-sealable resin layer and the barrier layer, the adhesive layer and the barrier layer of the test piece were drawn in a direction of 180° at a gauge distance of 50 mm and a speed of 50 mm/min using a tensile tester (AGS-XPlus (trade name) manufactured by Shimadzu Corporation), the peeling strength (N/15 mm) of the test piece was measured. The measurement of the peeling strength of the test piece was performed 10 minutes after the test piece was taken out from the hydrous electrolytic solution and when the surface of the test piece was wet with water (i.e. the time for immersing the test piece in water was 10 minutes, and at this time, the electrolytic solution in the test piece was not sufficiently washed off (removed)). The strength at a gauge length of 65 mm was taken as peeling strength immediately after "take-out". Table 2 shows the results.

### (Adhesion when electrolytic solution is sufficiently washed off after immersion in water for 3 hours after immersion in hydrous electrolytic solution for 24 hours)

Table 2 shows adhesion (taken as "peeling strength 3 hours after immersion in water") measured after the test piece was immersed in water at 25°C in the container for 3 hours after the test piece taken out from the hydrous electrolytic solution was washed with water in the method for measuring <adhesion after immersion in hydrous electrolytic solution for 24 hours> above. For the peeling strength after immersion in water for 3 hours, the peeling strength is measured in the same manner as in the method for measuring <adhesion after immersion in hydrous electrolytic solution for 24 hours> above except that the test piece taken out from the hydrous electrolytic solution is immersed in water for 3 hours, so that the electrolytic solution permeating the test piece is dissolved in the water to eliminate swelling of the heat-sealable resin layer (due to permeation of the electrolytic solution) in the test piece, i.e. the adhesion is evaluated after the exterior material for electrical storage devices is immersed in water to sufficiently remove the electrolytic solution.

### (Initial adhesion)

The initial adhesion was evaluated as follows. First, each of the obtained exterior materials for electrical storage devices was cut to a size of 15 mm (TD) and 100 mm (MD) to obtain a test sample. Next, the test piece was delaminated between the heat-sealable resin layer and the barrier layer, the heat-sealable resin layer and the barrier layer were drawn in a direction of 180° at a gauge distance of 50 mm and a speed of 50 mm/min using a tensile tester (AGS-XPlus (trade name) manufactured by Shimadzu Corporation), the peeling strength (N/15 mm) of the test piece was measured, and the strength at the time of reaching a gauge distance of 65 mm was taken as initial adhesion. Table 2 shows the results. In delamination of the test piece T between the heat-sealable resin layer and the barrier layer, the adhesive layer situated between these layers is laminated on one or both of the heat-sealable resin layer and the barrier layer.

**[Table 2]**

| | Corrosion-resistant film | | | | | | | | Initial adhesion | Adhesion after immersion in hydrous electrolytic solution | |
|---|---|---|---|---|---|---|---|---|---|---|---|
| | Cross-sectional observation | | | | Formation condition | | | | Peeling strength (N/15 mm) | Peeling strength (N/15 mm) | |
| | Cross-sectional shape | Bumping mark | Layer separation | Sea-island unevenness | Coating method | Ultimate temperature (°C) | Ultimate time (sec) | Leveling agent | | Immediately after take-out | 3 hours after immersion in water |
| Example 1 | Strip shape | None | None | None | Direct gravure + smoothing | 190 | 1 | None | 12.6 | 12.0 | 14.5 |
| Example 2 | Strip shape | None | Present | None | Direct gravure | 190 | 1 | Present | 12.8 | 3.4 | 12.9 |
| Example 3 | Strip shape | None | Present | None | Direct gravure + smoothing | 190 | 120 | None | 11.9 | 4.0 | 12.6 |
| Example 4 | Strip shape | None | Present | Present | Direct gravure + smoothing | 160 | 7 | None | 12.6 | 2.8 | 10.2 |
| Example 5 | Strip shape | None | None | None | Direct gravure + smoothing | 190 | 1 | Present | 12.7 | 10.2 | 9.8 |
| Comparative Example 1 | Irregularity shape | Present | Present | Present | Direct gravure | 190 | 1 | None | 13.3 | 2.1 | 9.6 |
| Comparative Example 2 | Irregularity shape | Present | Present | None | Direct gravure | 190 | 120 | None | 12.0 | 3.5 | 6.8 |

The exterior material for electrical storage devices in each of Examples 1 to 5 includes a laminate including at least a base material layer, a barrier layer, an adhesive layer and a heat-sealable resin layer in this order, and
includes a corrosion-resistant film on at least a surface of the barrier layer on the adhesion layer side, in which when a cross-sectional observation image of a thickness-direction cross-section of the corrosion-resistant film is acquired using a scanning electron microscope, the corrosion-resistant film is observed in a strip shape on the cross-sectional observation image. The exterior materials for electrical storage devices in Examples 1 to 5 are shown to be excellent in electrolytic solution resistance. Specifically, when an exterior material for electrical storage devices was immersed in a hydrous electrolytic solution, and the exterior material for electrical storage devices was then immersed in water to sufficiently remove the electrolytic solution, initial high adhesion between a barrier layer including a corrosion-resistant film and an adhesive layer was maintained. These results show that in the exterior materials for electrical storage devices in Examples 1 to 4, deterioration of adhesion by hydrofluoric acid contained in the hydrous electrolytic solution is suitably suppressed.

On the other hand, the exterior materials for electrical storage devices in Comparative Examples 1 and 2 had an irregularity shape with bumping marks rather than a strip shape when the corrosion-resistant film was observed in a cross-sectional observation image. The exterior materials for electrical storage devices in Examples 1 and 2 were poor in electrolytic solution resistance as initial high adhesion between a barrier layer including a corrosion-resistant film and an adhesive layer was not maintained even when the electrolytic solution was sufficiently removed by immersing the exterior material for electrical storage devices in water after immersing the exterior material for electrical storage devices in a hydrous electrolytic solution.

As described above, the present disclosure provides inventions of aspects as described below.

Item 1. An exterior material for electrical storage devices, including a laminate including at least a base material layer, a barrier layer, an adhesive layer and a heat-sealable resin layer in this order,
in which the exterior material for electrical storage devices includes a corrosion-resistant film on at least a surface of the barrier layer on the adhesion layer side, and
when a cross-sectional observation image of a thickness-direction cross-section of the corrosion-resistant film is acquired using a scanning electron microscope, the corrosion-resistant film is observed in a strip shape on the cross-sectional observation image.

Item 2. The exterior material for electrical storage devices according to item 1, in which the adhesive layer is formed of a cured product of a resin composition containing an acid-modified polyolefin and a curing agent.

Item 3. The exterior material for electrical storage devices according to item 1 or 2, in which the corrosion-resistant film contains chromium.

Item 4. The exterior material for electrical storage devices according to any one of items 1 to 3, in which sea-island unevenness is not observed in the cross-sectional observation image of the corrosion-resistant film.

Item 5. The exterior material for electrical storage devices according to any one of items 1 to 4, in which layer separation is not observed in the cross-sectional observation image of the corrosion-resistant film.

Item 6. A method for manufacturing an exterior material for electrical storage devices, the method including the step of preparing a laminate in which at least a base material layer, a barrier layer, an adhesive layer and a heat-sealable resin layer are laminated in this order,
in which the exterior material for electrical storage devices includes a corrosion-resistant film on at least a surface of the barrier layer on the adhesion layer side, and
when a cross-sectional observation image of a thickness-direction cross-section of the corrosion-resistant film is acquired using a scanning electron microscope, the corrosion-resistant film is observed in a strip shape on the cross-sectional observation image.

Item 7. An electrical storage device in which an electrical storage device element including at least a positive electrode, a negative electrode and an electrolyte is stored in a packaging formed of the exterior material for electrical storage devices according to any one of items 1 to 5.

### DESCRIPTION OF REFERENCE SIGNS

1: Base material layer
2: Adhesive agent layer
3: Barrier layer
3a, 3b: Corrosion-resistant film
4: Heat-sealable resin layer
5: Adhesive layer
6: Surface coating layer
10: Exterior material for electrical storage devices

## Claims

1. An exterior material for electrical storage devices, comprising a laminate including at least a base material layer, a barrier layer, an adhesive layer and a heat-sealable resin layer in this order,
wherein the exterior material for electrical storage devices includes a corrosion-resistant film on at least a surface of the barrier layer on the adhesion layer side, and
when a cross-sectional observation image of a thickness-direction cross-section of the corrosion-resistant film is acquired using a scanning electron microscope, the corrosion-resistant film is observed in a strip shape on the cross-sectional observation image.

2. The exterior material for electrical storage devices according to claim 1, wherein the adhesive layer is formed of a cured product of a resin composition containing an acid-modified polyolefin and a curing agent.

3. The exterior material for electrical storage devices according to claim 1 or 2, wherein the corrosion-resistant film contains chromium.

4. The exterior material for electrical storage devices according to any one of claims 1 to 3, wherein sea-island unevenness is not observed in the cross-sectional observation image of the corrosion-resistant film.

5. The exterior material for electrical storage devices according to any one of claims 1 to 4, wherein layer separation is not observed in the cross-sectional observation image of the corrosion-resistant film.

6. A method for manufacturing an exterior material for electrical storage devices, the method comprising the step of preparing a laminate in which at least a base material layer, a barrier layer, an adhesive layer and a heat-sealable resin layer are laminated in this order,
wherein the exterior material for electrical storage devices includes a corrosion-resistant film on at least a surface of the barrier layer on the adhesion layer side, and
when a cross-sectional observation image of a thickness-direction cross-section of the corrosion-resistant film is acquired using a scanning electron microscope, the corrosion-resistant film is observed in a strip shape on the cross-sectional observation image.

7. An electrical storage device in which an electrical storage device element comprising at least a positive electrode, a negative electrode and an electrolyte is stored in a packaging formed of the exterior material for electrical storage devices according to any one of claims 1 to 5.
